# EUROPEAN PATENT SPECIFICATION

(11) **EP 2 230 801 B1**
(45) Date of publication and mention of the grant of the patent: **20.03.2013**
(21) Application number: 09703502.6
(22) Date of filing: 06.01.2009
(51) Int. Cl.: H04L 12/66, H04L 29/06, H04L 12/18, H04L 29/08

(54) **METHOD FOR SENDING AND RECEIVING MULTIMEDIA OPERATION DATA, BASE STATION DEVICE AND USER DEVICE**
VERFAHREN ZUM SENDEN UND EMPFANGEN VON MULTIMEDIA-OPERATIONSDATEN SOWIE BASISSTATIONSVORRICHTUNG UND BENUTZERVORRICHTUNG
PROCÉDÉ D'ENVOI ET DE RÉCEPTION DE DONNÉES DE SERVICE MULTIMÉDIA, DISPOSITIF DE STATION DE BASE ET DISPOSITIF D'UTILISATEUR

(30) Priority: 07.01.2008 CN 200810032540
(43) Date of publication of application: 22.09.2010
(73) Proprietor: Alcatel Lucent, 75007 Paris (FR)
(72) Inventor: CHEN, Yu, Shanghai 201206 (CN); WANG, He, Shanghai 201206 (CN); WANG, Yonggang, Shanghai 201206 (CN)
(74) Representative: Wetzel, Emmanuelle
(86) International application number: PCT/CN2009/000014
(87) International publication number: WO 2009/092277

(56) References cited:
- WO-A1-2004/017540
- WO-A1-2005/078963
- CN-A- 1 905 694
- CN-A- 1 922 803
- CN-A- 101 047 994
- US-A1- 2005 041 681
- MANARTE P ET AL: "An optimized point-to-point MBMS mode scheduling scheme", WIRELESS COMMUNICATION SYSTEMS, 2005. 2ND INTERNATIONAL SYMPOSIUM ON SIENA, ITALY 05-09 SEPT. 2005, PISCATAWAY, NJ, USA,IEEE, PISCATAWAY, NJ, USA, 5 September 2005 (2005-09-05), pages 652-656, XP010886337, DOI: 10.1109/ISWCS.2005.1547786 ISBN: 978-0-7803-9206-9

## Description

### Field of the Invention

The present invention relates to multimedia service data transmitting and receiving technology, and in particular to methods for transmitting and receiving multimedia service data, base station (NodeB equipment) and user equipment which enable dynamic scheduling of MBMS (Multimedia Broadcast/Multicast Service) service in SFN (Single Frequency Network) transmission.

### Background of the Invention

The 3GPP (3^{rd} Generation Partnership Project) launched LTE (Long Term Evolution) in 2005, which aims to provide support for increasing requirements from operators and subscribers with higher data throughput and better network performance.

The 3GPP Rel. 6 has introduced MBMS which is a point-to-multipoint service for transmitting data from a single data source to multiple users, so as to achieve sharing of network (including core network and access network) resources and to provide services for more multimedia users of identical requirements with fewer resources. In a wireless access network, by using public transmission channel and public wireless carrier, MBMS service can implement not only message-type multicast and broadcast of pure text and lower rate, but also multimedia service multicast and broadcast of higher rate, such as mobile phone television.

Under the LTE, the existing MBMS service has evolved into E-MBMS (Evolved MBMS). Several services are multiplexed on a single Multicast CHannel (MCH) in a time division manner. Such MCH generally occupies only a portion of all system resources, and those resources occupied by the MCH are represented by MSAP (MBMS Subframe Allocation Pattern). MSAP comprises a series of subframes which may be discontinuous. Generally, MSAP rarely has any change during an overall session, and thus can be simply called as static schedule information.

If UE knows only MSAP, the UE may have to recall all services on the MCH, because the UE cannot learn exactly which subframes should be received. It is thus desirable to further indicate to the UE how to receive only those subframes associated with the UE so as to preserve power of the UE.

WO 2005/078963 A1 discloses transmitting and receiving control information for multimedia broadcast/multicast service in mobile communication systems, wherein MBMS-related control information includes a session start for indicating a start of an MBMS service and a session stop for indicating an end of the MBMS service.

WO 2004/017540 A1 discloses a multimedia service of a UMTS (Universal Mobile Telecommunications System).

### Summary of the Invention

An object of the present invention is to provide methods for transmitting and receiving multimedia service data, NodeB equipment and user equipment which enable dynamic schedulig of MBMS service in SFN transmission.

An aspect of the present invention provides a method for transmitting multimedia service data, comprising steps of: receiving transmission order information representing the order in which a plurality of multimedia services is to be transmitted; generating schedule imformation including the beginning indices of the plurality of multimedia services; and transmitting data of the plurality of multimedia services based on the transmission order information and the schedule information.

Another aspect of the present invention provides a method for receiving multimedia service data, comprising steps of: receiving transmission order information representing the order in which a plurality of multimedia services is to be transmitted; receiving schedule information including the beginning indices of the plurality of multimedia services; and receiving data of particular ones of the multimedia services based on the transmission order information and the schedule information.

A further aspect of the present invention provides a base station comprising: means for receiving transmission order information representing the order in which a plurality of multimedia services is to be transmitted; generation means for generating schedule information including the beginning indices of the plurality of multimedia services; and transmission means for transmitting data of the plurality of multimedia services based on the transmission order information and the schedule information.

A still further aspect of the present invention provides a user equipment comprising: reception means for receiving transmission order information representing the order in which a plurality of multimedia services is to be transmitted and for receiving schedule information including the beginning indices of the plurality of multimedia services; and reception control means for receiving data of particular ones of the multimedia services based on the transmission order information and the schedule information.

With the methods and equipment of the present invention, dynamic scheduling for MBMS service can be implemented in a SFN network so that power preservation of user equipment can be achieved in the case of discontinuous transmission and statistical multiplexing can be performed feasibly.

### Brief Description of the Drawings

The above and other objects, features and advantages of the present invention will be more apparent from the following description of preferred embodiments with reference to the drawings, in which:
Fig. 1 is a schematic diagram of a communication system in which the methods, NodeB equipment and user equipment according to embodiments of the present invention are applied;
Fig. 2 shows a schematic block diagram of NodeB equipment according to embodiments of the present invention.
Fig. 3 shows an exemplary structure of MSAP according to embodiments of the present invention;
Fig. 4 is a specific flow chart illustrating a method for transmitting multimedia service data according to embodiments of the present invention;
Fig. 5 shows a schematic block diagram of user equipment according to embodiments of the present invention; and
Fig. 6 is a specific flow chart illustrating a method for receiving multimedia service data according to embodiments of the present invention.

### Detailed Description of the Preferred Embodiments

A detailed description of preferred embodiments of the present invention will be given below in conjunction with the drawings. In the description, any detail and function unnecessary to the present invention are omitted so that the above objects, features and advantages of the present invention will not be obscured.

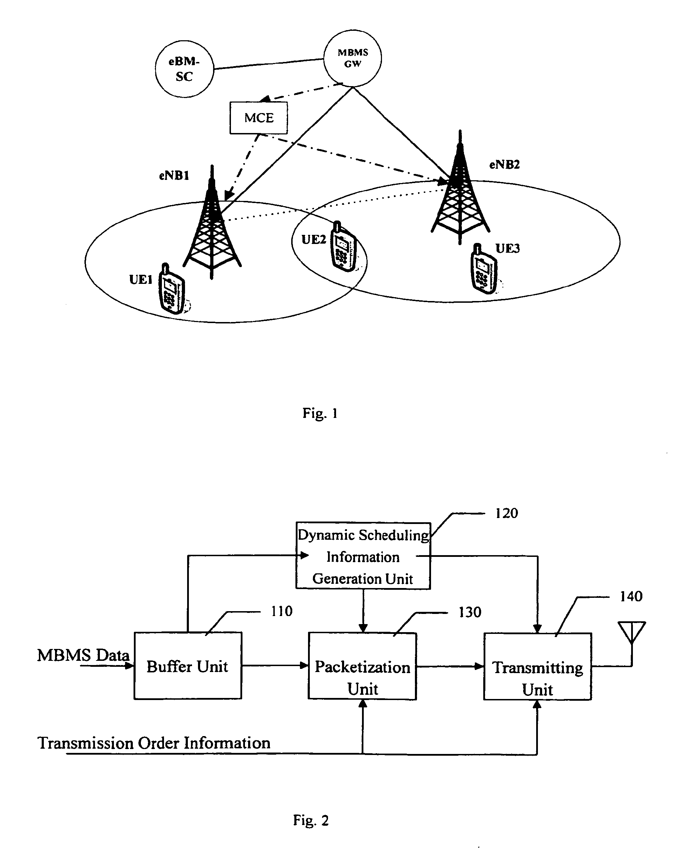

Fig. 1 shows the network architecture of a communication system according embodiments of the present invention. As shown in Fig. 1, only one evolved eBM-SC (evolved Broadcast/Multicast Service Center), one MBMS GW (GateWay), two NodeBs, eNB1 and eNB2, located in the same SFN region, and user equipment UE1, UE2, UE3 are shown for the purpose of illustration, while any other devices like routers are omitted.

Under the LTE, a user plane interface between MBMS GW and the base stations eNBs is called as M1 interface, and an interface between the base stations eNB1 and eNB2 is called as X2 interface.

Further, in the user plane, data is sent from MBMS GW directly to the eNBs, and the interface between them is called as M1 interface. In a control plane, signaling is first sent from the MBMS GW to MCE (MBMS Control Entity), and then sent from MCE to the respective eNBs via M2 interface(s). The duration of a scheduling period and static scheduling information are both configured by MCE.

Obviously, the network architecture shown in Fig. 1 is only intended to illustrate the embodiments of the present invention and should not be construed as limiting any network architecture applied in any actual applications. One skilled in the art can employ several MBMS gateways and more NodeBs and add other auxiliary devices.

According to an embodiment of the present invention, in addition to the static scheduling information, dynamic scheduling information is introduced into MSAP to indicate to user equipment the positions of respective services to be received by the user equipment. The subframes used for representing dynamic scheduling information are part of MSAP, and these subframes can be called as dynamic scheduling information. Dynamic scheduling is critical to support statistical multiplexing, and is very beneficial for power saving in case of DRX (Discontinuous RX). As mentioned above, a single MCH may carry a number of services, and a large amount of power will be wasted if UE receives its desired services by receiving all subframes indicated by MSAP.

MSAP is valid for the session until MCE changes it. In other words, MSAP may vary with change of the session. Suppose there are N_{f} subframes in one MSAP (N_{f} is a natural number), these subframes can be indexed from 1 to N_{f} according to the transmission timing relationship of the subframes. This is useful to indicate the transmission occasions for a specific service, which avoids an exact indication of the position of a subsequent subframe and thus reduces signaling overhead. According to the present embodiment, for certain E-MBMS service, it is only required to indicate to the UE the indices of the subframes to be transmitted by a specific MTCH (MBMS point-to-multipoint Traffic CHannel).

According to an embodiment of the present invention, data of an individual service in MSAP are transmitted with consecutive indices, that is, indices for the same service are set to be consecutive, so as to simplify composition of dynamic scheduling information. In this case, for example, dynamic scheduling information provided in MSAP needs to indicate only the beginning index of a service and the number of the indices. This would be beneficial for UE power saving, especially in case the UE does not receive the scheduling information correctly. Since all the eNBs should guarantee the same scheduling information, packets to be scheduled must be received and buffered first. So, it is feasible to record and transmit data of the same service with the consecutive indices of MSAP subframe set.

Fig. 2 shows a schematic block diagram of base station (NodeB equipment) according to embodiments of the present invention. As shown in Fig. 2, the NodeB equipment comprises a buffer unit 110, a paketization unit 130, a scheduling information generation unit 120 and a transmitting unit 140.

The buffer unit 110 stores temporarily multimedia service data, such as MBMS data, received by a receiving unit (not shown) from MBMS gateway.

In the scenario of transmitting data of several services, the NodeB equipment needs to transmit the transmission order of the respective services in MSAP which is determined by MCE. For example, the transmitting unit 140 transmits over MCCH (MBMS point-to-multipoint Control CHannel) the MSAP received via the receiving unit, with the MSAP containing the transmission order of data for the respective services.

It is unnecessary to transmit the transmission order information at each scheduling process. Instead, its transmission is generally repeated at a lower frequency, such as every 640ms. Scheduling may be conducted in a granularity of only 160ms. Typically, upon the beginning of a service session, the order information of the individual services has been determined. The order information is transmitted repeatedly to the UE until another session starts, during which the possibility of change is not excluded. Thereafter, the data arrive, and the eNBs perform scheduling.

As given above, the transmission order can be pre-configured by MCE, and can be determined with some priority information. In this way, the scheduling information would be simpler and has less signaling overhead. For example, there are three services, service A, service B and service C, multiplexed on the same MCH. If there are the numbers of 3, 2, 4 subframes allocated to the three services, respectively, the scheduling information could be just as {3, 2, 4}, and no service ID is required. Hence, it is required to send the transmission order information, which is a list of services multiplexed onto the MCH, to the UE via MCCH in the same order as that of scheduling.

As such, the indices for each of the MBMS services are consecutive, so that the scheduling information can have a simpler structure. As an example, the scheduling information generation unit 120 can generate scheduling information comprising the beginning index of the service.

Further, according to an embodiment of the present invention, the dynamic scheduling information for the individual services can be added into the first subframe in MSAP, and be sent to the user equipment by the transmitting unit 140 via L3 logic channel like MSCH or via L1/L2 signaling in respective scheduling update periods. In the case of transmitting the scheduling information via L1/L2 signaling, the scheduling information can be transmitted as part of MAC header or transmitted via MAC control element.

In another embodiment, the scheduling information can be distributed among subframes of a specific MTCH and transmitted. In this case, the scheduling information could be distributed among different MAC PDUs as part of MAC PDUs.

In another embodiment, the scheduling information can be transmitted over MCCH, unlike the above description of transmitting the scheduling information as multiplexed with service data.

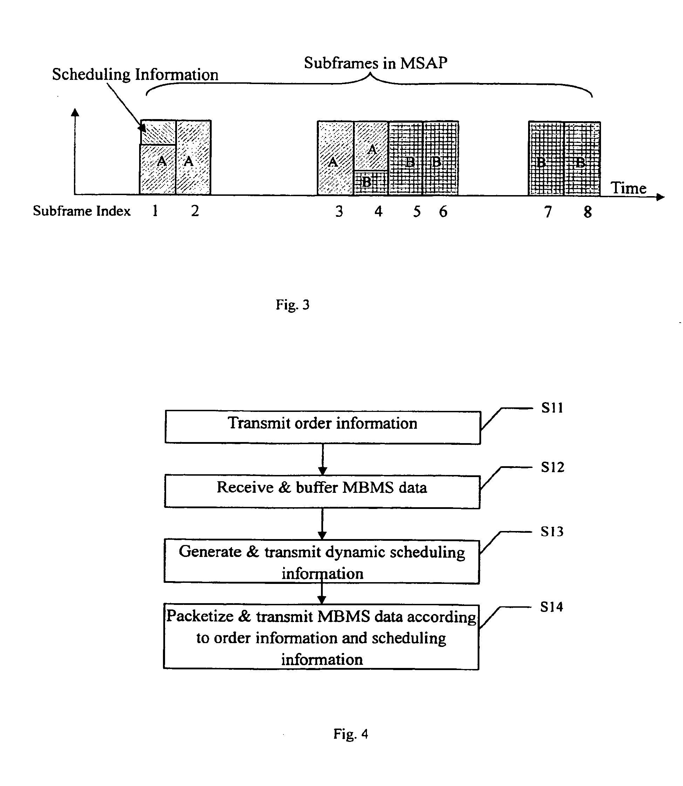

Fig. 3 shows an exemplary structure diagram of MSAP of MCH according to embodiments of the present invention. As shown in Fig. 3, service A and service B are multiplexed on the MCH. There are a total of 8 subframes in the MSAP subframe set. In the current scheduling period, service A is to be transmitted in subframe indices {1, 2, 3, 4}, and service B is to be transmitted in subframe indices {4, 5, 6, 7, 8}. In subframe 4, the two services are concatenated in the same MAC PDU. The scheduling information is transmitted via the MAC control element in the transmitting unit 140. For example, the scheduling information can be arranged in the first subframe of the MSAP.

Then, the packetization unit 130 packetizes the data of the services stored temporarily in the buffer unit 110 according to the transmission order information determined before the start of the session as well as the dynamic scheduling information generated by the scheduling information generation unit 120, such that the indices for each service in the MSAP are consecutive, and the data packets of different services are concatenated together.

During the data transmitting period, the transmitting unit 140 groups the data of the services and transmits them one by one in timing order, according to the transmission order information and the scheduling information determined by the scheduling information generation unit 120.

According to an embodiment of the present invention, the scheduling information can be updated periodically by MCE, usually before transmission of data.

Fig. 4 is a specific flow chart illustrating a method for transmitting multimedia service data according to embodiments of the present invention. As shown in Fig. 4, at step S11, the transmitting unit 140 receives the transmission order information configured by MCE and forwards it to the user equipment.

At step S12 after the start of the session, the buffer unit 110 stores temporarily multimedia service data, such as MBMS data, received from MBMS gateway.

Then, at step S 13, the indices for each MBMS service are consecutive in the MSAP, so that the scheduling information can have a simple structure. For example, the scheduling information generation unit 120 can generate scheduling information comprising the beginning index of the service.

As described above, the scheduling information can comprise beginning position information, and it can additionally comprise other information. If the scheduling information comprises only beginning position information, the UE needs to conduct blind detection upon reception of the information. That is, if the UE receives data of another service or receives the last index in the MSAP during a certain scheduling period, the reception for the service during the current scheduling period is completed.

At step S14, the packetization unit 130 packetizes the data of the services stored temporarily in the buffer unit 110 according to the transmission order information determined before the start of the session as well as the dynamic scheduling information generated by the scheduling information generation unit 120, such that the indices for each service in the MSAP are consecutive, and the data packets of different services are concatenated together.

During the data transmitting period, the transmitting unit 140 groups the data of the services and transmits them one by one in timing order, according to the transmission order information and the scheduling information determined by the scheduling information generation unit 120.

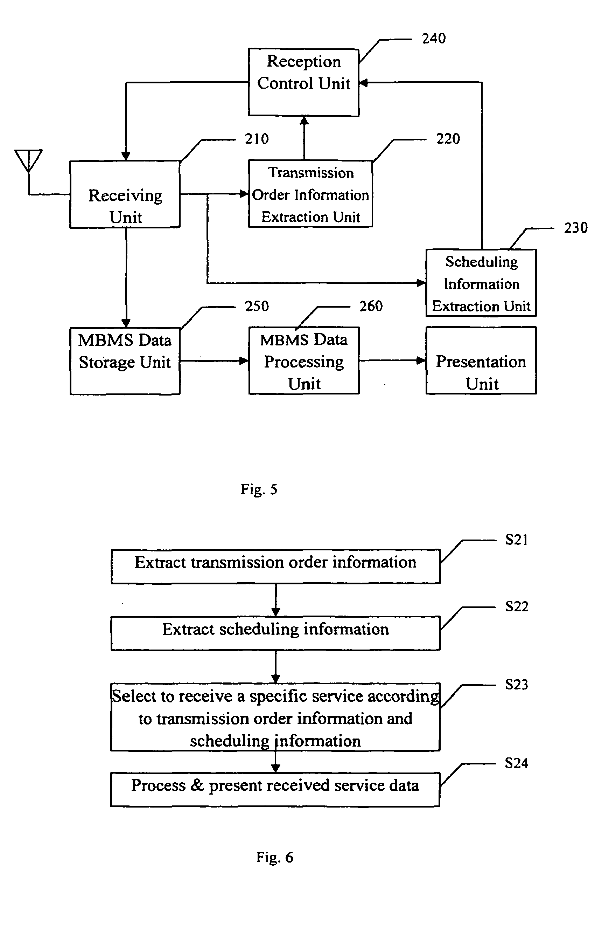

Fig. 5 shows a schematic block diagram of user equipment according to embodiments of the present invention. As shown in Fig. 5, the user equipment comprises a receiving unit 210, a reception control unit 240, a transmission order information extraction unit 220, a scheduling information extraction unit 230, an MBMS data storage unit 250, an MBMS data processing unit 260 and a presentation unit 270.

The receiving unit 210 first receives all of the data transmitted from the NodeB equipment including the transmission order information on MCCH channel. Then, the transmission order information extraction unit 220 extracts the transmission order information configured by MCE from the data received by the receiving unit 210. As given previously, it is unnecessary to transmit the transmission order information at each scheduling process. Instead, its transmission is generally repeated at a lower frequency, such as every 640ms. Scheduling may be conducted in a granularity of only 160ms. Typically, upon the beginning of a service session, the order information of the individual services has been determined. The order information is transmitted repeatedly to the UE until another session starts.

After the start of the session, the scheduling information extraction unit 230 extracts the scheduling information from the data received by the receiving unit 210. The scheduling information comprises, for example, the beginning index of a service in the MSAP.

Then, according to the transmission order information and the scheduling information, the reception control unit 240 controls the receiving unit 210 to receive the MBMS data of a specific service, such as a mobile television program, and to store the data into the MBMS data storage unit 250.

Here, the receiving unit 210 needs to conduct blind detection when the UE is in the operation of reception. That is, if the receiving unit receives data of another service or receives the last index in the MSAP during a certain scheduling period, the reception for the service during the current scheduling period is completed.

The MBMS data processing unit 260 performs processing, such as decoding and decompression, on the MBMS data stored in the MBMS data storage unit 250 so as to restore them to content data to be presented. Then, the content data are presented by the presentation unit 270, such as displaying the mobile television program.

In addition, if the user wants to receive a new program, the receiving unit 240 can receive MBMS data corresponding to such new program.

Fig. 6 is a specific flow chart illustrating a method for receiving multimedia service data according to embodiments of the present invention. As shown in Fig. 6, the receiving unit 210 first receives all of the data including the transmission order information. Then, at step S21, the transmission order information extraction unit 220 extracts the transmission order information configured by MCE from the data received by the receiving unit 210.

At step S22 after the start of the session, the scheduling information extraction unit 230 extracts the scheduling information from the data received by the receiving unit 210. The scheduling information comprises, for example, the beginning index of a service in the MSAP.

Then, at step S23, according to the transmission order information and the scheduling information, the reception control unit 240 controls the receiving unit 210 to receive the MBMS data of a specific service, such as a mobile television program, and to store the data in the MBMS data storage unit 250.

At step S24, the MBMS data processing unit 260 performs processing, such as decoding and decompression, on the MBMS data stored in the MBMS data storage unit 250 so as to restore them to content data to be presented. Then, the content data are presented by the presentation unit 270, such as displaying the mobile television program.

The present invention has been disclosed above with the preferred embodiments. Those skilled in the art can make various variations, replacements and additions to the present invention within the scope of the present invention. Therefore, the scope of the present invention is not limited to the above specific embodiments, but should be defined by the appended claims.

## Claims

1. A method for transmitting multimedia service data, comprising steps of: receiving transmission order information representing the order in which a plurality of multimedia services is to be transmitted; generating (S13) schedule information including the beginning indices of the plurality of multimedia services; and transmitting (S14) data of the plurality of multimedia services based on the transmission order information and the schedule information.

2. The method of Claim 1, further comprising a step of transmitting the received transmission order information.

3. The method of Claim 1, further comprising a step of transmitting the generated schedule information.

4. The method of Claim 1, wherein the indices of the plurality of multimedia services are in succession.

5. The method of Claim 1, wherein the transmission order information is transmitted via a Multimedia Broadcast/Multicast Service, MBMS, point-to-multipoint Control Channel, MCCH logical channel.

6. The method of Claim 1, wherein the schedule information is transmitted via Layer 1, L1, / Layer 2, L2, signaling or Layer 3, L3 logical channel.

7. The method of Claim 6, wherein the schedule information is added into the first subframe of MBMS Subframe Allocation Pattern, MSAP.

8. The method of Claim 6, wherein the schedule information is transmitted in such a manner of being distributed in different Media Access Control, MAC, Protocol Data Units, PDUs.

9. A method for receiving multimedia service data, comprising steps of: receiving transmission order information representing the order in which a plurality of multimedia services is to be transmitted; receiving schedule information including the beginning indices of the plurality of multimedia services; and receiving data of particular ones of the multimedia services based on the transmission order information and the schedule information.

10. The method of Claim 9, wherein the indices of the plurality of multimedia services are in succession.

11. A base station (eNB1), comprising: means for receiving transmission order information representing the order in which a plurality of multimedia services is to be transmitted; generation means (120) for generating schedule information including the beginning indices of the plurality of multimedia services; and transmission means (140) for transmitting data of the plurality of multimedia services based on the transmission order information and the schedule information.

12. The base station (eNB1) of Claim 11, wherein the transmission means (140) is configured to transmit the received transmission order information.

13. The base station (eNB1) of Claim 11, wherein the transmission means (140) is configured to transmit the generated schedule information.

14. A user equipment (UE1), comprising: reception means (210) for receiving transmission order information representing the order in which a plurality of multimedia services is to be transmitted and for receiving schedule information including the beginning indices of the plurality of multimedia services; and reception control means (240) for receiving data of particular ones of the multimedia services based on the transmission order information and the schedule information.

15. The user equipment (UE1) of Claim 14, wherein the indices of the plurality of multimedia services are in succession.

## Patentansprüche

1. Verfahren zur Übertragung von Multimediadienst-Daten, die folgenden Schritte umfassend: Empfangen von Übertragungsreihenfolge-Informationen, welche die Reihenfolge, in welcher eine Vielzahl von Multimediadiensten übertragen werden soll, darstellen; Erzeugen (S13) von Planungsinformationen, welche die Startindizes der Vielzahl von Multimediadiensten enthalten; und Übertragen (S14) der Daten der Vielzahl von Multimediadiensten auf der Basis der Übertragungsreihenfolge-Informationen und der Planungsinformationen.

2. Verfahren nach Anspruch 1, weiterhin umfassend einen Schritt des Übertragens der empfangenen Übertragungsreihenfolge-Informationen.

3. Verfahren nach Anspruch 1, weiterhin umfassend einen Schritt des Übertragens der erzeugten Planungsinformationen.

4. Verfahren nach Anspruch 1, wobei die Indizes der Vielzahl von Multimediadiensten aufeinander folgen.

5. Verfahren nach Aspruch 1, wobei die Übertragungsreihenfolge-Informationen über einen logischen Multimedia Broadcast-/Multicast-Dienst, MBMS, Punkt-zu-Mehrpunkt-Steuerkanal, MACH, Kanal übertragen werden.

6. Verfahren nach Anspruch 1, wobei die Planungsinformationen über einen Signalisierungskanal der Schicht-1, L1, / Schicht-2, L2, oder einen logischen Kanal der Schicht-3, L3, übertragen werden.

7. Verfahren nach Anspruch 6, wobei die Planungsinformationen in den ersten Teilrahmen des MBMS-Teilrahmenzuweisungsmusters, MSAP, eingefügt werden.

8. Verfahren nach Anspruch 6, wobei die Planungsinformationen derart übertragen werden, dass sie in unterschiedlichen Medienzugriffssteuerungs- bzw. MAC-Protokolldateneinheiten, PDUs, verteilt sind.

9. Verfahren zum Empfangen von Multimediadienst-Daten, die folgenden Schritte umfassend: Empfangen von Übertragungsreihenfolge-Informationen, welche die Reihenfolge, in welcher eine Vielzahl von Multimediadiensten übertragen werden soll, darstellen; Empfangen von Planungsinformationen, welche die Startindizes der Vielzahl von Multimediadiensten enthalten; und Empfangen der Daten bestimmter Multimediadienste auf der Basis der Übertragungsreihenfolge-Informationen und der Planungsinformationen.

10. Verfahren nach Anspruch 9, wobei die Indizes der Vielzahl von Multimediadiensten aufeinander folgen.

11. Basisstation (eNB1), umfassend: Mittel zum Empfangen von Übertragungsreihenfolge-Informationen, welche die Reihenfolge, in welcher eine Vielzahl von Multimediadiensten übertragen werden soll, darstellen; Erzeugungsmittel (120) zum Erzeugen von Planungsinformationen, welche die Startindizes der Vielzahl von Multimediadiensten enthalten; und Übertragungsmittel (140) zum Übertragen von Daten der Vielzahl von Multimediadiensten auf der Basis der Übertragungsreihenfolge-Informationen und der Planungsinformationen.

12. Basisstation (eNB1) nach Anspruch 11, wobei das Übertragungsmittel (140) für die Übertragung der empfangenen Übertragungsreihenfolge-Informationen konfiguriert ist.

13. Basisstation (eNB1) nach Anspruch 11, wobei das Übertragungsmittel (140) für die Übertragung der erzeugten Planungsinformationen konfiguriert ist.

14. Benutzerendgerät (UE1), umfassend: Empfangsmittel (210) zum Empfangen von Übertragungsreihenfolge-Informationen, welche die Reihenfolge, in welcher eine Vielzahl von Multimediadiensten übertragen werden soll, darstellen, und zum Empfangen von Planungsinformationen, welche die Startindizes der Vielzahl von Multimediadiensten enthalten; und Empfangssteuerungsmittel (240) zum Empfangen von Daten bestimmter der Multimediadienste auf der Basis der Übertragungsreihenfolge-Informationen und der Planungsinformationen.

15. Benutzerendgerät (UE1) nach Anspruch 14, wobei die Indizes der Vielzahl von Multimediadiensten aufeinander folgen.

## Revendications

1. Procédé de transmission de données de service multimédia comprenant les étapes suivantes : réception d'informations d'ordre de transmission représentant l'ordre dans lequel il faut transmettre une pluralité de services multimédia ; génération (S13) d'informations d'ordonnancement contenant les indices de début de la pluralité de services multimédia ; et transmission (S14) des données de la pluralité de services multimédia en se basant sur les informations d'ordre de transmission et les informations d'ordonnancement.

2. Procédé selon la revendication 1, comprenant en outre une étape de transmission des informations d'ordre de transmission reçues.

3. Procédé selon la revendication 1, comprenant en outre une étape de transmission des informations d'ordonnancement générées.

4. Procédé selon la revendication 1, selon lequel les indices de la pluralité de services multimédia sont successifs.

5. Procédé selon la revendication 1, selon lequel les informations d'ordre de transmission sont transmises par le biais d'un canal logique de diffusion multimédia/service multimédia, MBMS, à canal de commande point à multipoint, MCCH.

6. Procédé selon la revendication 1, selon lequel les informations d'ordonnancement sont transmises par le biais d'un canal logique de couche 1, L1, de couche 2, L2, de signalisation ou de couche 3, L3.

7. Procédé selon la revendication 6, selon lequel les informations d'ordonnancement sont ajoutées dans la première sous-trame du modèle d'allocation de sous-trame MBMS, MSAP.

8. Procédé selon la revendication 6, selon lequel les informations d'ordonnancement sont transmises de manière à être distribuées dans différentes unités de données de protocole, PDU, de commande d'accès au support, MAC.

9. Procédé de réception de données de service multimédia comprenant les étapes suivantes : réception d'informations d'ordre de transmission représentant l'ordre dans lequel il faut transmettre une pluralité de services multimédia ; réception d'informations d'ordonnancement contenant les indices de début de la pluralité de services multimédia ; et réception de données de certains parmi la pluralité de services multimédia en se basant sur les informations d'ordre de transmission et les informations d'ordonnancement.

10. Procédé selon la revendication 9, selon lequel les indices de la pluralité de services multimédia sont successifs.

11. Station de base (eNB1) comprenant: des moyens pour recevoir des informations d'ordre de transmission représentant l'ordre dans lequel il faut transmettre une pluralité de services multimédia; des moyens de génération (120) pour générer des informations d'ordonnancement contenant les indices de début de la pluralité de services muitimédia ; et des moyens de transmission (140) pour transmettre des données de la pluralité de services multimédia en se basant sur les informations d'ordre de transmission et les informations d'ordonnancement.

12. Station de base (eNB1) selon la revendication 11, avec laquelle les moyens de transmission (140) sont configurés pour transmettre les informations d'ordre de transmission reçues.

13. Station de base (eNB1) selon la revendication 11, avec laquelle les moyens de transmission (140) sont configurés pour transmettre les informations d'ordonnancement générées.

14. Équipement d'utilisateur (UE1) comprenant : des moyens de réception (210) pour recevoir des informations d'ordre de transmission représentant l'ordre dans lequel il faut transmettre une pluralité de services multimédia et pour recevoir des informations d'ordonnancement contenant les indices de début de la pluralité de services multimédia ; et des moyens de commande de réception (240) pour recevoir des données de certains parmi la pluralité de services multimédia en se basant sur les informations d'ordre de transmission et les informations d'ordonnancement.

15. Équipement d'utilisateur (UE1) selon la revendication 14, avec lequel les indices de la pluralité de services multimédia sont successifs.
